# EUROPEAN PATENT APPLICATION

(11) **EP 4 712 200 A1**
(43) Date of publication of application: **18.03.2026**
(21) Application number: 24818215.6
(22) Date of filing: 09.01.2024
(51) Int. Cl.: H01M 10/42, H01M 50/503, H01M 50/528

(54) **BATTERY AND ELECTRONIC DEVICE**

(30) Priority: 09.06.2023 CN 202310686981
(71) Applicant: Huawei Technologies Co., Ltd., Shenzhen, Guangdong 518129 (CN)
(72) Inventor: CHEN, Mengxun, Shenzhen, Guangdong 518129 (CN); XIA, Huihe, Shenzhen, Guangdong 518129 (CN); LUO, Lijuan, Shenzhen, Guangdong 518129 (CN); ZENG, Liyan, Shenzhen, Guangdong 518129 (CN); WANG, Xiaoying, Shenzhen, Guangdong 518129 (CN); WANG, Shihao, Shenzhen, Guangdong 518129 (CN); LIN, Weijie, Shenzhen, Guangdong 518129 (CN)
(74) Representative: Grünecker Patent- und Rechtsanwälte PartG mbB
(86) International application number: PCT/CN2024/071291
(87) International publication number: WO 2024/250676

(57) **Abstract**

A battery and an electronic device are provided. The battery includes a cell and a protection board assembly, where a head of the cell has a top seal, and an electrode tab of the cell extend from the top seal. The protection board assembly includes an FPC and a first protection component, where the first protection component is a protection component whose size in a thickness direction of the battery is greater than a preset threshold. The FPC includes a first part and a second part, where the first part of the FPC is configured to be disposed on the top seal of the cell in a stacked manner, and the second part of the FPC extends from the first part to a direction away from the top seal. An electrical signal loop between the cell and a mainboard is formed through connection via the FPC. The first protection component is disposed on the second part of the FPC. In this way, the first protection component whose height size is greater than the preset threshold is removed from a position of the top seal, and is disposed away from a stacking area above the top seal, so that space occupied by the protection component at the position of the top seal can be reduced, volumetric energy density of the battery can be effectively improved, and trending design requirements for lightness and thinness of a product are met.

## Description

This application claims priority to Chinese Patent Application No. 202310686981.9, filed with the China National Intellectual Property Administration on June 9, 2023 and entitled "BATTERY AND ELECTRONIC DEVICE", which is incorporated herein by reference in its entirety.

### TECHNICAL FIELD

Embodiments of this application relate to the field of electronic technologies, and in particular, to a battery and an electronic device.

### BACKGROUND

With increasing requirements for lightness and thinning of electronic devices such as computers and mobile phones, controlling a battery volume and improving battery energy density have become a focus of research and development in the industry. A pouch-type lithium-ion battery is used as an example. A battery thickness is mainly limited by a size of a protection board assembly stacked on a top seal.

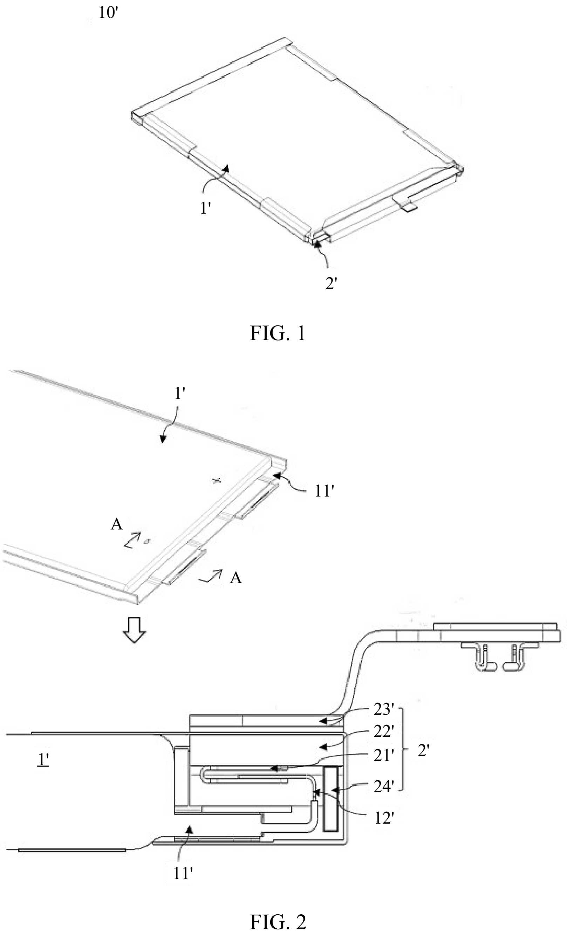

Refer to FIG. 1 and FIG. 2. FIG. 1 is a diagram of a typical overall structure of a battery 10'. A protection board assembly 2' of the battery 10' is located at a head of a cell 1', and is specifically stacked on a top seal 11' extending out of the cell 1'. FIG. 2 is a diagram of a stacking and assembly relationship of the protection board assembly 2'.

With reference to FIG. 2, an electrode tab 12' of the cell 1' is welded below a PCB 22' via a U-shaped adapter plate 21', and is electrically connected to a load component through an FPC (flexible printed circuit, flexible printed circuit board) 23' located above the PCB (printed circuit board, printed circuit board) 22', to form an electrical signal loop. A protection component 24' is disposed below the PCB 22' and is located on a front side of the electrode tab 12'. When a thickness of the cell is reduced to a value less than a specific size, the protection board assembly stacked on the top seal 11' may exceed a thickness of a main body of the cell. In other words, stacked structure components of the protection board assembly 2' cannot adapt to a thin thickness size of the cell. As a result, an overall thickness of the battery is large, and additional battery space needs to be designed to accommodate the battery, which is not conducive to improvement of volumetric energy density of the battery. Especially, for an ultra-thin battery (for example, a thickness is less than 3.0 mm), the foregoing stacking manner of the protection board assembly has a particularly significant impact on the volumetric energy density of the battery.

### SUMMARY

Embodiments of this application provide a battery and an electronic device, to improve volumetric energy density of the battery by reducing a thickness size at a position of a top seal of a cell.

A first aspect of embodiments of this application provides a battery, including a cell and a protection board assembly, where a head of the cell has a top seal, the top seal is disposed in a length direction of the cell, and an electrode tab of the cell extends from the top seal; the protection board assembly includes an FPC and a first protection component, where the first protection component is a protection component whose size in a thickness direction of the battery is greater than a preset threshold, and the protection component is configured to construct a protection circuit; the FPC includes a first part and a second part, the first part of the FPC is configured to be disposed on the top seal in a stacked manner, and a first connection part electrically connected to the electrode tab is disposed on the first part of the FPC; the second part of the FPC is formed by extending from the first part to a direction away from the top seal, and a second connection part configured to be electrically connected to a mainboard is disposed on an extension end of the second part of the FPC, to form an electrical signal loop between the cell and the mainboard through connection; and the first protection component is disposed on the second part of the FPC. In this way, the first protection component whose height size is greater than the preset threshold is disposed on the second part of the FPC. In other words, the first protection component is disposed away from a stacking area above the top seal, so that space occupied by a protection component of a large size at the position of the top seal can be reduced, a structure of the protection board assembly stacked on the top seal matches a thickness size of a main body of the cell, and an outline of the main body of the light and thin cell may not be exceeded. In this way, volumetric energy density of the battery can be effectively increased while design requirements for lightness and thinning are met.

In addition, based on a structural feature that the second part of the FPC is formed by extending from the first part, the second part of the FPC may be disposed based on arrangement space of an accommodating cavity of the electronic device, to reduce space occupied by a structure of the protection board assembly in the length direction of the head of the battery, and further improve the volumetric energy density of the battery.

In an actual application, there may be one or more first protection components whose component height sizes are greater than the preset threshold.

For example, the first connection part configured to be electrically connected to the electrode tab may be an electrode tab pad, and the second connection part configured to be electrically connected to the mainboard may be a connector.

According to the first aspect, an embodiment of this application further provides a first implementation of the first aspect: The battery further includes a short-circuit protection structure, and the short-circuit protection structure is disposed on the FPC. In this way, the short-circuit protection structure is disposed on a line between the cell and the protection component, to obtain reliable protection when a short circuit occurs on the line between the cell and the protection component, avoid a security risk like thermal damage caused by an excessively large current, and provide reliable technical assurance for safety during a battery charging and discharging process.

For example, the short-circuit protection structure may be disposed at a position that is on the first part of the FPC and that is near a cell side, or the short-circuit protection structure may alternatively be disposed at a position that is on the second part of the FPC and that is near the first part.

In an actual application, the short-circuit protection structure may be a narrow line segment. When a short circuit occurs, a design in which a local wiring becomes narrow is quickly fused, to avoid danger and implement a short-circuit protection function.

In another actual application, the short-circuit protection structure may alternatively be a fuse or a circuit breaker.

According to the first aspect or the first implementation of the first aspect, this embodiment of this application further provides a second implementation of the first aspect: The protection board assembly further includes a second protection component, the second protection component is a protection component whose size in the thickness direction of the battery is less than or equal to the preset threshold, and the second protection component is disposed on the second part of the FPC. In this way, the protection circuit is integrated and disposed on the second part of the FPC, and an overall layout of the circuit is more appropriate and has good reliability.

In another actual application, the second protection component may alternatively be disposed on the first part of the FPC. Based on overall product design and specific protection circuit architecture design, the protection component may be appropriately arranged to meet function requirements of different application scenarios.

According to the first aspect, or the first implementation of the first aspect, or the second implementation of the first aspect, this embodiment of this application further provides a third implementation of the first aspect: The protection component disposed on the second part of the FPC is disposed on the second part after being packaged. This arrangement can avoid collision during reliability test or assembly operation, and has good operability.

According to the first aspect, or the first implementation of the first aspect, or the second implementation of the first aspect, or the third implementation of the first aspect, this embodiment of this application further provides a fourth implementation of the first aspect: The protection component disposed on the second part of the FPC is directly disposed on the second part. On this basis, the battery further includes a third reinforcement sheet, where the protection component is welded to a surface on one side of a substrate of the second part, and the third reinforcement sheet is attached and fastened to a surface on the other side that is of the substrate of the second part and that is opposite to the protection component. In this way, good local structure rigidity can be obtained, so that the protection component is in a stable and reliable use state.

According to the first aspect, or the first implementation of the first aspect, or the second implementation of the first aspect, or the third implementation of the first aspect, or the fourth implementation of the first aspect, this embodiment of this application further provides a fifth implementation of the first aspect: The battery further includes a positive electrode connection plate and a negative electrode connection plate, where the positive electrode connection plate and the negative electrode connection plate are separately welded to the first part of the FPC, and the positive electrode connection plate and the negative electrode connection plate are respectively configured to be electrically connected to a positive electrode tab and a negative electrode tab that extend from the top seal. After the assembly is completed, the positive electrode tab and the positive electrode connection plate, and the negative electrode tab and the negative electrode connection plate are respectively disposed between the first part of the FPC and the top seal in a stacked manner. A thickness size at the position of the top seal of the cell can be appropriately controlled while a reliable electrical connection relationship is implemented.

In an actual application, a first reinforcement sheet may be included. The positive electrode connection plate and the negative electrode connection plate are separately welded to a surface on one side of a substrate of the first part. Correspondingly, the first reinforcement sheet is attached and fastened to a surface on the other side of the substrate of the first part. In this way, structural rigidity of the first part may be enhanced based on a support function of the first reinforcement sheet.

For example, the first reinforcement sheet may be made of a metal material or a non-metal material.

In an actual application, the first part of the FPC is electrically connected to the positive electrode tab through the positive electrode connection plate, and is electrically connected to the negative electrode tab through the negative electrode connection plate. Both the positive electrode connection plate and the negative electrode connection plate are U-shaped connection plates. The positive electrode tab and the negative electrode tab extend from the top seal and bend towards the main body side of the cell, and are respectively disposed inside openings of the U-shaped positive electrode connection plate and the negative electrode connection plate. The positive electrode tab and the positive electrode connection plate, and the negative electrode tab and the negative electrode connection plate are separately disposed between the first part and the top seal of the FPC in a stacked manner. The battery has a characteristic of a simple and compact structure while reliability of a current path is satisfied.

According to a second aspect, an embodiment of this application further provides an electronic device, where the electronic device includes a mainboard and a battery, the battery is the battery described above, and a protection board assembly of the battery is electrically connected to the mainboard.

In an actual application, the battery based on the protection board assembly may be applied to an application scenario having design requirements for lightness and thinning, and may be specifically an electronic device including a rechargeable battery, such as a mobile phone, a tablet computer, a notebook computer, or a wearable device.

According to a third aspect, an embodiment of this application further provides an electronic device, where the electronic device includes a mainboard, a sub-board, and a battery, and the battery includes a cell, a protection board assembly, and a first protection component. A head of the cell has a top seal, the top seal is disposed in a length direction of the cell, and a positive electrode tab and a negative electrode tab of the cell extend from the top seal. The protection board assembly includes an FPC, where the FPC includes a first part and a second part, the first part of the FPC is disposed on the top seal in a stacked manner, and a first connection part electrically connected to the electrode tab is disposed on the first part of the FPC. The second part of the FPC is formed by extending from the first part to a direction away from the top seal, a second connection part is disposed on an extension end of the second part of the FPC, and a third connection part electrically connected to the second connection part is disposed on the mainboard. The first protection component is a protection component whose size in a thickness direction of the battery is greater than a preset threshold, and the first protection component is disposed on the mainboard or at least the first protection component is disposed on the sub-board. In this way, the removed protection component is disposed on the mainboard or the sub-board of the electronic device, so that the protection component is disposed away from a stacking area of the top seal, and a thickness at a position of the top seal is reduced.

In actual application, the electronic device may further include a short-circuit protection structure, and the short-circuit protection structure is disposed on the FPC.

For example, the short-circuit protection structure is a narrow line segment; or the short-circuit protection structure is a fuse or a circuit breaker.

According to a fourth aspect, an embodiment of this application further provides an electronic device, where the electronic device includes a mainboard, a sub-board, and a battery, the battery includes a cell, a protection board assembly, and a first protection component, a head of the cell has a top seal, the top seal is bent relative to the cell and is disposed in a thickness direction of the cell, and an electrode tab of the cell extends from the top seal. The protection board assembly includes an FPC, where the FPC includes a first part and a second part, the first part of the FPC is disposed on the top seal in a stacked manner, and a first connection part electrically connected to the electrode tab is disposed on the first part of the FPC. The second part of the FPC is formed by extending from the first part to a direction away from the top seal, a second connection part is disposed on an extension end of the second part of the FPC, and a third connection part electrically connected to the second connection part is disposed on the mainboard. The first protection component is a protection component whose size in a length direction of the battery is greater than a preset threshold, and the first protection component is disposed on the mainboard or disposed on the sub-board. In this way, space occupied by a large-sized protection component in a length direction at a position of the top seal can be reduced, space occupied by a large-sized protection component at the position of the top seal can be reduced, and volumetric energy density of the battery can also be effectively increased while design requirements for lightness and thinning are met.

### BRIEF DESCRIPTION OF DRAWINGS

FIG. 1 is a diagram of a typical overall structure of a battery;
FIG. 2 is a diagram of a stacking and assembly relationship of a protection board assembly of the battery shown in FIG. 1;
FIG. 3 is a diagram of a structure of a mobile phone according to an embodiment of this application;
FIG. 4 is a diagram of an assembly relationship of a battery shown in FIG. 3;
FIG. 5 is a diagram of an assembly relationship of a protection board assembly according to an embodiment of this application;
FIG. 6 is an exploded view of assembly of the protection board assembly shown in FIG. *5**;*
FIG. 7 is a diagram of a structure of an FPC according to an embodiment of this application.
FIG. 8 is a side view of an assembly relationship between a battery protection assembly and a top seal shown in FIG. 5;
FIG. 9 is a partial diagram of a short-circuit prevention structure of an FPC according to an embodiment of this application;
FIG. 10 is a partial diagram of another short-circuit prevention structure of an FPC according to an embodiment of this application;
FIG. 11 is a diagram of an overall structure of another protection board assembly according to an embodiment of this application;
FIG. 12 is a diagram of an overall structure of still another protection board assembly according to an embodiment of this application;
FIG. 13 is a diagram of a structure of another mobile phone according to an embodiment of this application;
FIG. 14 is a diagram of a battery compartment of the mobile phone shown in FIG. 13;
FIG. 15 is a diagram of a structure of still another mobile phone according to an embodiment of this application;
FIG. 16 is a diagram of a structure of yet another mobile phone according to an embodiment of this application; and
FIG. 17 is a diagram of an assembly relationship of another protection board assembly according to an embodiment of this application.

### DESCRIPTION OF EMBODIMENTS

Embodiments of this application provide a layout solution of a protection board assembly of a battery, to appropriately control a thickness size at a position of a top seal of a cell, and effectively improve volumetric energy density of the battery while design requirements for lightness and thinning are met.

Generally, a battery applied to an electronic device like a mobile phone or a tablet computer includes a cell and a protection board assembly. The cell is configured to supply power to a component of the electronic device. The battery protection board is configured to protect the battery, for example, but not limited to providing protection functions such as overcharge, overdischarge, overcurrent, short circuit, and anti-counterfeiting, to avoid a safety and reliability problem in a battery charging and discharging process.

The protection board assembly includes a circuit board and a corresponding protection component, to construct a protection circuit for implementing a protection function. A configuration of the protection component needs to be selected based on a control logic design of the protection circuit. For example, the protection component may include, but is not limited to, a current detection resistor, an NTC (Negative Temperature Coefficient, negative temperature coefficient) resistor configured to detect a battery temperature, a transistor configured to control a battery charging/discharging loop to be disconnected, a transient suppression diode for port surge protection, a protection chip for detecting faults such as battery overvoltage, undervoltage, and overcurrent, and a common resistor or capacitor required by a peripheral circuit of a chip. Herein, the protection circuit formed based on the foregoing protection component may be implemented by using the conventional technology. Therefore, details are not described in this specification.

For functional components of the protection board assembly, in the typical architecture shown in FIG. 2, when a thickness of the cell is reduced to a value less than a specific size (for example, but not limited to 3.0 mm), a size of the protection board assembly in a thickness direction of the battery cannot be further reduced due to a limitation of a common process implementation. Therefore, the protection board assembly stacked on the top seal 11' exceeds a thickness of a main body of the cell 1', directly affecting an increase in volumetric energy density of the battery.

Based on this, an embodiment of this application provides a layout implementation solution of a protection board assembly. The protection board assembly may include an FPC (flexible printed circuit, flexible printed circuit board) and a protection component. The FPC includes a first part and a second part, the first part of the FPC is configured to be disposed in a stacking area above the top seal, a first connection part configured to be electrically connected to an electrode tab is disposed on the first part of the FPC, the second part of the FPC is formed by extending from the first part, and a second connection part configured to be electrically connected to a mainboard is disposed at an extension end of the second portion of the FPC. Protection components used to construct a protection circuit have different height sizes. A protection component whose component height size is greater than a preset threshold may be defined as a first protection component, and at least the first protection component in the protection components used to construct the protection circuit is disposed on the second part of the FPC. In other words, at least the first protection component whose size in a thickness direction of a battery is greater than the preset threshold is disposed on the second part of the FPC.

Herein, the "component height size" is a size of a corresponding protection component that affects the thickness of the battery in a stacking direction. The "preset threshold" is not particularly a specific size, and may be specifically determined for different battery products, to control a thickness size at a position of a top seal of a cell as required. There may be one or more first protection components whose component height sizes are greater than the preset threshold. In this way, the first protection component whose height size is greater than the preset threshold is disposed on the second part of the FPC. In other words, the first protection component is disposed away from a stacking area above the top seal, so that space occupied by a protection component of a large size in the thickness direction at the position of the top seal can be reduced, a structure of the protection board assembly stacked on the top seal matches a thickness size of a main body of the cell, and an outline of the main body of the light and thin cell may not be exceeded. In this way, volumetric energy density of the battery can be effectively increased while design requirements for lightness and thinning are met.

In addition, based on a structural feature that the second part of the FPC is formed by extending from the first part, the second part of the FPC may be disposed based on arrangement space of an accommodating cavity of the electronic device, to reduce space occupied by a structure of the protection board assembly in the length direction of the head of the battery, and further improve the volumetric energy density of the battery.

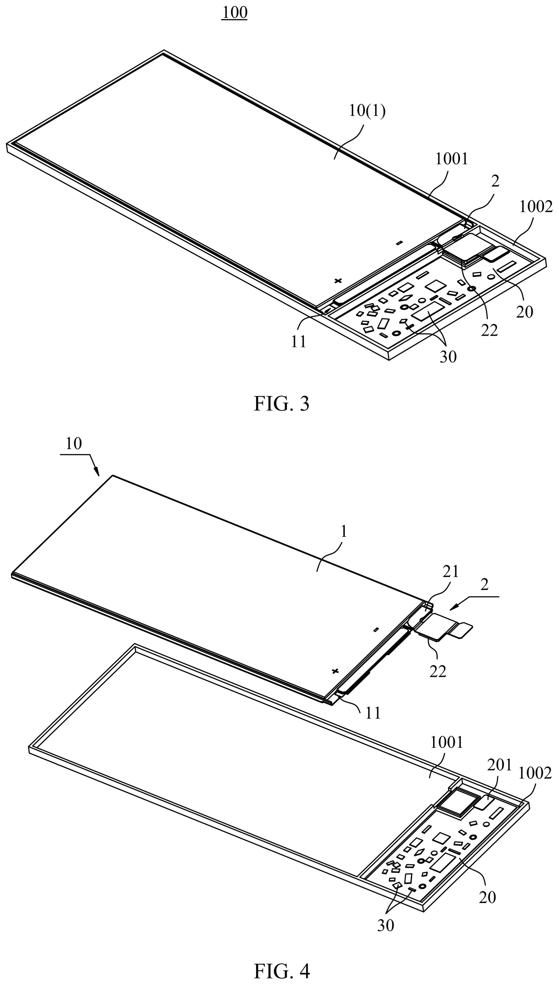

The layout solution of the protection board assembly of the battery provided in this embodiment of this application may be applied to different scenarios that have design requirements for lightness and thinning of a product, for example, but not limited to, an electronic device having a rechargeable battery, such as a mobile phone, a tablet computer, a notebook computer, an intelligent wearable product (for example, a smartwatch or a smart band), a virtual reality (virtual reality, VR) terminal device, or an augmented reality (augmented reality, AR) terminal device. Refer to FIG. 3. FIG. 3 is a diagram of a structure of a mobile phone according to an embodiment of this application.

As shown in FIG. 3, in a system architecture of the mobile phone 100, a battery 10, a mainboard 20, and an electronic component 30 are disposed inside an accommodating cavity of the mobile phone. A cell 1 of the battery 10 is disposed in a battery compartment 1001, a protection board assembly 2 is connected to a top of the cell 1, and the protection board assembly 2 is connected to the mainboard 20. The battery 10 may supply power to the mainboard 20, and may supply power to the electronic component 30 via the mainboard 20.

For design requirements for lightness and thinning of a product, space occupied by the battery 10 in a thickness direction is correspondingly reduced. Generally, a smaller volume of a main body of the cell 1 of the battery 10 and an area of a top seal 11 located on a head of the cell 1 is more conducive to increasing volumetric energy density of the battery. Refer to FIG. 4. FIG. 4 is a diagram of an assembly relationship of a battery shown in FIG. 3. Herein, to clearly show a relative position relationship of the battery 10 located inside the mobile phone, neither FIG. 3 nor FIG. 4 shows a structure that forms a housing part of the mobile phone on a perspective side.

The top seal 11 is disposed in a length direction of the cell 1, and the thickness size at the position of the top seal 11 needs to be appropriately controlled. Based on the protection board assembly 2 provided in this embodiment of this application, the protection component 22 may be disposed away from the stacking area of the top seal 11, to reduce the thickness at the position of the top seal. In particular, for a foldable mobile phone, this technical solution has particularly significant advantages.

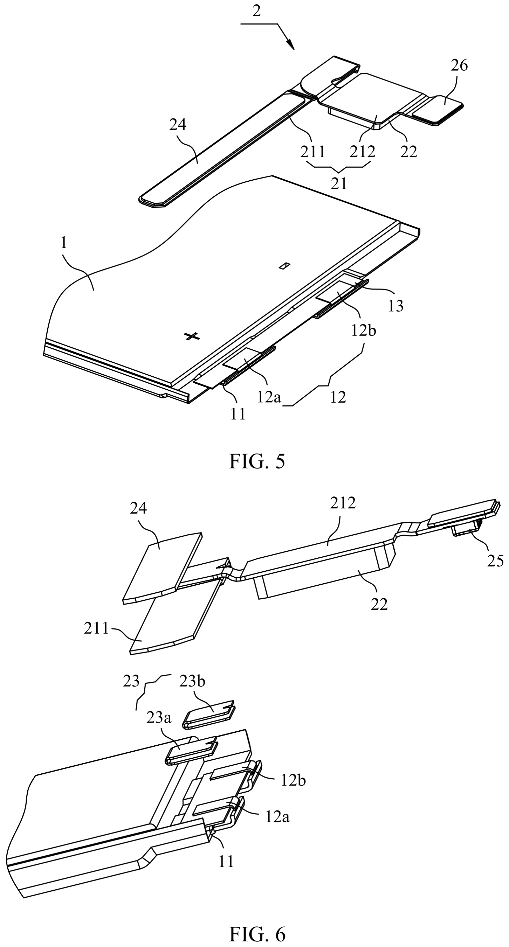

To better understand the technical solutions and technical effects of this application, without loss of generality, the following describes specific embodiments in detail with reference to the accompanying drawings. Refer to FIG. 5 and FIG. 6. FIG. 5 is a diagram of an assembly relationship of a protection board assembly according to an embodiment of this application. FIG. 6 is an exploded view of assembly of the protection board assembly shown in FIG. 5.

A protection board assembly 2 of a battery 10 is connected to a cell 1, the protection board assembly 2 includes an FPC 21 and a protection component 22, and the FPC 21 is used as a base for constructing a protection circuit. As shown in FIG. 5, the FPC 21 includes a first part 211 and a second part 212. The first part 211 of the FPC is configured to be disposed in a stacking area above a top seal 11, and the first part 211 is electrically connected, through a first connection part, to an electrode tab 12 extending from the top seal 11. The second part 212 of the FPC is formed by extending from the first part 211, and the second part 212 is electrically connected to a mainboard through a second connection part.

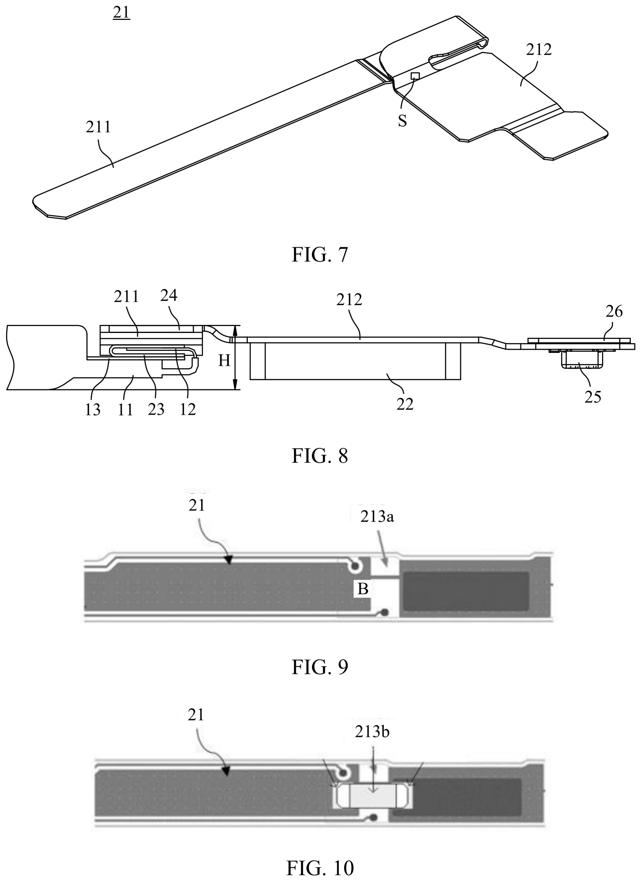

With reference to FIG. 6, the electrode tab 12 extending from the top seal 11 includes a positive electrode tab 12a and a negative electrode tab 12b, and is electrically connected to the first part 211 of the FPC 21 through a correspondingly configured U-shaped connection plate 23. The positive electrode tab 12a is connected to a positive interface of the first connection part on the first part 211 of the FPC 21 through a positive electrode connection plate 23a, and the negative electrode tab 12b is connected to a negative interface of the first connection part on the first part 211 of the FPC through a negative electrode connection plate 23b. For example, but not limited to, the first connection part may be an electrode tab pad disposed on the first part 211 of the FPC 21. This is not limited in this embodiment of this application. The positive electrode tab 12a and the positive electrode connection plate 23a, and the negative electrode tab 12b and the negative electrode connection plate 23b are respectively disposed between the first part of the FPC 21 and the top seal 11 in a stacked manner. Refer to FIG. 7. FIG. 7 is a diagram of a structure of an FPC according to an embodiment of this application.

In addition, the connection plate that is between the first part of the FPC and the electrode tab and that is configured to implement an electrical connection is not limited to the "U" shape shown in the figure. In a specific implementation, an "L" shape connection plate may alternatively be used. In other words, the foregoing electrical connection relationship can alternatively be implemented by bending the corresponding connection plate once, so that a thickness size at the position of the top seal can be further reduced. Herein, a structural pattern of the connection plate is not limited in this embodiment of this application.

As shown in FIG. 7, the first part 211 and the second part 212 of the FPC 21 are disposed at an angle. In this implementation solution, the FPC 21 is configured to form an electrical signal loop through connection between the cell 1 and the mainboard 20, and is also configured to construct a protection circuit. A structural pattern of the first part 211 is adapted to the top seal 11 on the head of the cell 1, so that size occupation in the length direction of the battery can be appropriately controlled. A structural pattern of the second part 212 is mainly adapted to assembly of the protection component 22 removed from the top seal 11 and a configuration requirement of an interface connected to the mainboard 20.

It may be understood that a substrate structure of the FPC 21 is not limited to bending and folding arrangements shown in the figure. In a specific implementation, an avoidance structure design may be used for the substrate structure of the FPC 21 based on an arrangement of components or structures inside an actual product.

Further, as shown in FIG. 3, based on an extended arrangement of the second part 212, the protection component 22 configured to construct the protection circuit is located on a side of a mainboard compartment 1002, that is, located outside the battery compartment 1001. Herein, the protection component 22 may include a protection chip, a current detector resistor, an NTC resistor, a transistor, a transient suppression diode (a voltage regulator tube), a MOS (protection board execution switch), and a component type such as a conventional resistor or a capacitor required by a peripheral circuit of the chip. In a specific implementation, a specific component and a quantity of configured components may be selected based on function settings of the protection circuit. This is not limited in this embodiment of this application.

In this implementation solution, after the protection components 22 removed from the position of the top seal 11 are packaged, the protection components 22 may be specifically packaged into COB (Chips on Board, chips on board) or SIP (System In a Package, system in a package). Then, a package body is welded to the second part 212 of the FPC. Compared with a structural configuration manner at the position of the top seal shown in FIG. 2, this solution can effectively reduce height space occupied by the protection component 22 at the position of the top seal 11. Refer to FIG. 8. FIG. 8 is a side view of an assembly relationship between a battery protection assembly and a top seal shown in FIG. 5.

At the position of the top seal 11, the electrode tab 12 extends upward from the top seal 11 and then bends towards the main body side of the cell 1, is located above the top seal 11, and is fastened to the first part 211 of the FPC 21 via the connection plate 23 through welding. As shown in FIG. 8, the electrode tab 12 is disposed inside an opening of the U-shaped connection plate 23. The connection plate 23 may be fastened to the top seal 11 by using an insulation adhesive layer 13. In this implementation solution, the protection component 22 is disposed on the second part 212 of the FPC, so that space occupied by the protection component at the position of the top seal is reduced, and a structural part that is of the protection board assembly 2 and that is stacked on the top seal does not exceed a main outline of the cell 1.

To further improve assembly process of the protection board assembly 2, this implementation solution may further include a first reinforcement sheet 24. As shown in FIG. 6 and FIG. 8, the positive electrode connection plate 23a and the negative electrode connection plate 23b are separately welded to a surface on one side of the substrate of the first part 211, and the first reinforcement sheet 24 is attached and fastened to a surface on the other side of the substrate of the first part 211 of the FPC 21, to support the first part 211 and enhance structural stiffness of the first part 211. As shown in FIG. 8, a stacking height size H at the position of the top seal 11 is appropriately controlled, and meets trending design requirements for lightness and thinness of a product.

In a specific implementation, the first reinforcement sheet 24 may be made of a metal material or a non-metal material, provided that function implementation of the FPC 21 is not affected. This is not limited in this embodiment of this application.

In this implementation solution, the second connection part on the second part 212 of the FPC 21 is a first connector 25 disposed at the extension end of the second part 212, and an electrical connection of a corresponding signal interface is established through plug-in and snap-fit between the first connector 25 and a second connector 201 correspondingly disposed on the mainboard 20. In other words, a positive voltage end and a negative voltage end on the mainboard 20 side are electrically connected through a group of connectors that adapt to each other, to form an electrical signal loop. In a specific implementation, there may be two groups of first connectors 25 and second connectors 201 that are plug-in and snap-fit with each other, to implement dual-circuit control.

Herein, to improve operation reliability of the first connector 25, the extension end of the second part 212 may further include a second reinforcement sheet 26, and the second reinforcement sheet 26 is disposed on the second part 212 on an opposite side of the first connector 25, as specifically shown in FIG. 6 and FIG. 8.

In a specific implementation, the protection board assembly 2 may include two connectors: a positive electrode connector and a negative electrode connector (not shown in the figure). The protection board assembly 2 is electrically connected to a positive voltage end on the mainboard 20 side through the positive electrode connector, and is electrically connected to a negative voltage end on the mainboard 20 side through the negative electrode connector, to form an electrical signal loop.

In addition, for an implementation in which two connectors are included, the FPC 21 may include two second parts, and the two second parts are respectively formed by extending from the first part 211 of the FPC 21. The positive electrode connector and the negative electrode connector may be respectively disposed on corresponding second parts, and are separately snap-fit with the connector on the mainboard side, to form an electrical signal loop.

Certainly, for an implementation in which two connectors are included, the FPC 21 may alternatively include one second part as shown in FIG. 7. The positive electrode connector and the negative electrode connector are disposed at the extension end of the second part at an interval, and may also be separately snap-fit with the connector on the mainboard side, to form an electrical signal loop.

In another specific implementation, the second connection part configured to be electrically connected to the mainboard may alternatively be a structure like a pad or a conducting wire. This is not limited in this embodiment of this application. To avoid affecting safety and reliability in a battery charging and discharging process due to a short circuit between the removed protection component 22 and the main body of the cell 1, in this implementation solution, a short-circuit protection structure is disposed on a line between the cell 1 and the protection component 22. In this way, reliable protection is implemented when the line of the FPC 21 between the cell 1 and the protection component 22 is short-circuited, to avoid a safety risk like thermal damage caused by an excessively large current.

Refer to FIG. 9. FIG. 9 is a partial diagram of a short-circuit prevention structure of an FPC according to an embodiment of this application. As shown in FIG. 9, when a current path is normal, a narrow line segment 213a may be disposed on a conducting wire of the FPC 21. When a short circuit occurs, a design in which a local wiring becomes narrow based on the narrow line segment 213a can be quickly fused, to avoid a danger and implement a short circuit protection function.

In a specific implementation, a conducting wire in a flexible substrate may be made of a material with good conductivity, for example, but not limited to copper foil or copper wire. After the wiring becomes narrow, local impedance may be increased by increasing a wiring distance, so that a same effect can be achieved on the basis of ensuring wiring stress reliability.

Refer to FIG. 10. FIG. 10 is a partial diagram of another short-circuit prevention structure of an FPC according to an embodiment of this application. As shown in FIG. 10, a fuse (Fuse) 213b is disposed on a line of the FPC 21, and a current path is cut off by using a thermal sensitive element in an overload or short-circuit case, to implement a short-circuit protection function.

In another specific implementation, the short-circuit prevention structure may alternatively be a circuit breaker (not shown in the figure) disposed on a line of the FPC 21, and an electronic element or an electromagnetic element is used to implement short-circuit detection and current cut-off. In contrast, the circuit breaker can be reused. When a short circuit is detected, the current is cut off. After a short circuit fault is rectified, the circuit can be reconnected and used again.

For the short-circuit prevention structure on the FPC 21, to obtain a better protection effect, the narrow line segment, the fuse, or the circuit breaker may be disposed at a position that is of the first part 211 and that is close to the cell. In a specific implementation, the narrow line segment, the fuse, or the circuit breaker may alternatively be disposed at a position that is of the second part 212 and that is close to the first part 211, that is, disposed on a line close to the main body of the cell 1, which is specifically a position area marked with S in FIG. 7.

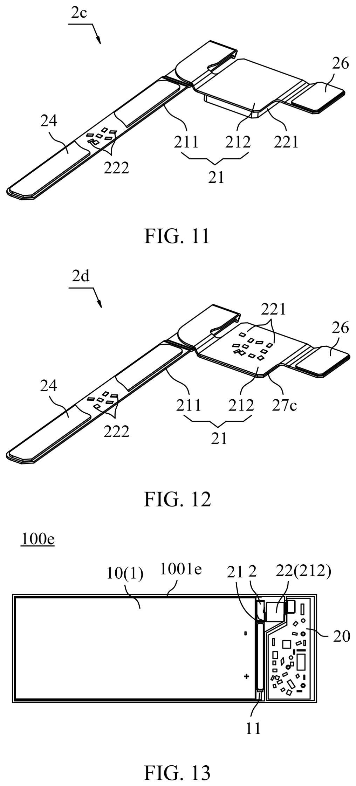

In addition, based on the flexible substrate of the FPC 21, a disposition area of the protection component may be further appropriately allocated. Specifically, the first protection component 221 whose height size is greater than the preset threshold is disposed away from the stacking area of the top seal 11. Refer to FIG. 11. FIG. 11 is a diagram of an overall structure of another protection board assembly according to an embodiment of this application. To clearly show a difference and a relationship between this implementation solution and the embodiment described in FIG. 5, components or structures with a same function are illustrated with a same numeral in the figures.

As shown in FIG. 11, protection components of a protection board assembly 2c are arranged in groups. A first protection component 221 whose height size is greater than the preset threshold is disposed on the second part 212 of the FPC 21. Specifically, after each first protection component 221 is packaged, a package body is welded to the second part 212 of the FPC. A second protection component 222 whose height size is less than or equal to the preset threshold is disposed on the first part 211 of the FPC 21. In other words, in this implementation solution, the protection components that form the protection circuit are arranged in groups. Specific grouping may be shown in Table 1.

**Table 1**

| | Protection component name | Protection component height size |
|---|---|---|
| First protection component | Protection chip, transistor, and transient suppression diode | Greater than a preset threshold |
| Second | Battery encryption chip, current detection resistor, | Less than or equal to a |
| protection component | NTC resistor, and conventional resistor and capacitor that are required by a peripheral circuit | preset threshold |

In a specific implementation, a protection component that affects a stacking thickness at the position of the top seal 11 may be removed, for example, but not limited to a protection chip, a transistor, and a transient suppression diode. In addition, a protection component with a small height size is disposed on the first part 211 stacked above the top seal 11, for example, but not limited to a battery encryption chip, a current detection resistor, a negative temperature coefficient resistor, and a conventional resistor and capacitor required by a peripheral circuit. In this way, a thickness size at the position of the top seal of the cell can also be appropriately controlled.

It should be noted that, for different battery application scenarios, the protection components used to construct the protection circuit are not limited to the grouping manner shown in Table 1, provided that corresponding protection components are located in positive and negative electrode electrical loops through FPC wiring. For example, the current detection resistor and the NTC resistor may be disposed in space of the battery compartment, or may be disposed in a manner of being removed from the second part 212 of the FPC 21.

According to the protection board assembly described in the foregoing implementation solution, the removed protection component is packaged and then welded to the second part 212 of the FPC 21, so that collision can be avoided during a reliability test or an assembly operation. In another specific implementation, the removed protection component may be separately fastened to the second part 212 of the FPC 21 through welding. Refer to FIG. 12. FIG. 12 is a diagram of an overall structure of still another protection board assembly according to an embodiment of this application. To clearly show a difference and a relationship between this implementation solution and the embodiment described in FIG. 5 and FIG. 11, components or structures with a same function are illustrated with a same numeral in the figures.

As shown in FIG. 12, protection components of a protection board assembly 2d are also arranged in groups. A first protection component 221 whose height size is greater than the preset threshold is fastened to the second part 212 of the FPC 21 through welding, a second protection component 222 whose height size is less than or equal to the preset threshold is disposed on the first part 211 of the FPC 21, to reduce stacking space occupied at the position of the top seal of the cell.

In addition, for the flexible substrate of the FPC 21 in a welding area of the first protection component 221, a third reinforcement sheet 27c is disposed in this implementation solution. The third reinforcement sheet 27c may be located on the second part 212 of the FPC 21 on an opposite side of the first protection component 221, as shown in FIG. 12. The first protection component 221 is welded to a surface of one side of the substrate of the second part 222, and the third reinforcement sheet 27c is attached and fastened to a surface of the other side that is of the substrate of the second part 222 and that is opposite to the first protection component 221, to obtain good local structural stiffness. In this way, the protection component is in a stable and reliable use state.

For different battery application scenarios, all protection components of the protection board assembly 2d may be disposed on the second part 212 of the FPC 21, and are fastened through welding, as shown in FIG. 12, and local structural stiffness is improved by using the third reinforcement sheet.

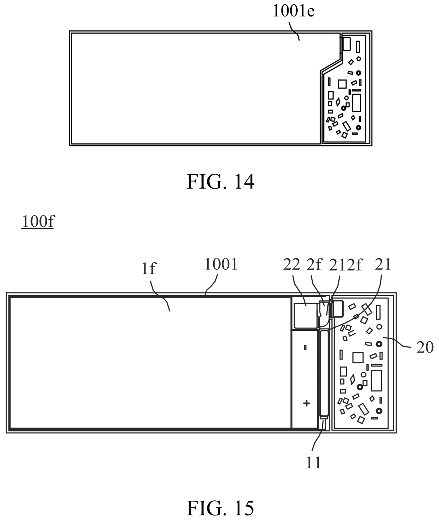

In addition, in a specific implementation, the protection component removed from the top seal 11 may alternatively be disposed in the battery compartment, especially an irregular-shaped battery compartment. Refer to FIG. 13 and FIG. 14. FIG. 13 is a diagram of a structure of another mobile phone according to an embodiment of this application. FIG. 14 is a diagram of a battery compartment of the mobile phone shown in FIG. 13. To clearly show a difference and a relationship between this implementation solution and the embodiment described in FIG. 3, components or structures with a same function are illustrated with a same numeral in the figures.

As shown in FIG. 13 and FIG. 14, a battery compartment 1001e of a mobile phone 100e is of an irregular-shaped structure, and the cell 1 of the battery 10 is located in the battery compartment 1001e. In this implementation solution, the protection component 22 disposed on the second part 212 of the FPC 21 is also located in the battery compartment 1001e. Specifically, as shown in FIG. 13, the protection component 22 may be disposed at a corner of the irregular-shaped battery compartment 1001e, to fully use internal space of the irregular-shaped battery compartment 1001e.

In this way, based on a structural feature of the flexible substrate of the FPC 21, the flexible substrate is applicable to different application scenarios, and has good adaptability. It may be understood that a shape and an aspect ratio of the irregular-shaped battery compartment shown in the figure are merely examples. This is not limited in this embodiment of this application.

Refer to FIG. 15. FIG. 15 is a diagram of a structure of another mobile phone according to an embodiment of this application. The figure shows another implementation solution in which the protection component removed from the top seal 11 is disposed in the battery compartment. To clearly show a difference and a relationship between this implementation solution and the embodiment described in FIG. 3, components or structures with a same function are illustrated with a same numeral in the figures.

As shown in FIG. 15, a battery compartment 1001 of a mobile phone 100f is of a rectangular structure. A cell 1f located in the battery compartment 1001 is of an irregular-shaped structure, and the cell 1f is approximately in an "L" shape. In addition, an unoccupied space is reserved at a corner that is of the battery compartment 1001 and that is adjacent to the mainboard 20. In this implementation solution, the protection component 22 disposed on the second part 212f of the FPC 21 is disposed in the unoccupied space at the corner of the battery compartment 1001, and is connected to the mainboard side through a substrate layout of the second part 212f.

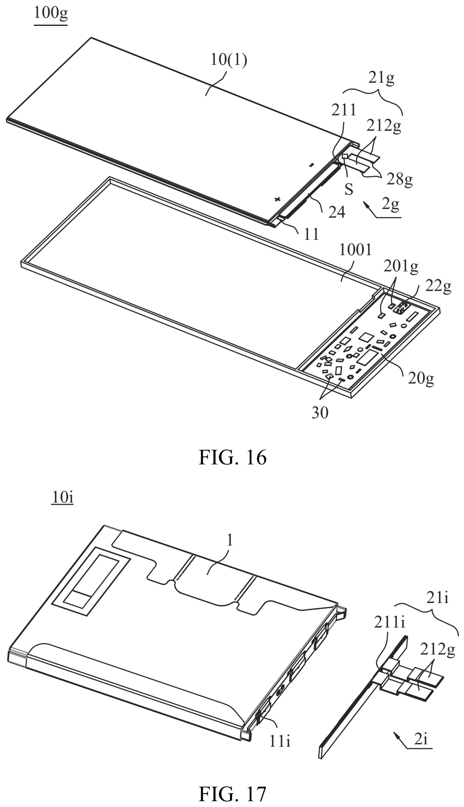

The protection board assembly described in the foregoing implementation solution and the protection component removed from the top seal 11 are all disposed on the second part 212 of the FPC 21. In another specific implementation, the removed protection component may be disposed on the mainboard of the electronic device. Refer to FIG. 16. FIG. 16 is a diagram of a structure of still another mobile phone according to an embodiment of this application. To clearly show a difference and a relationship between this implementation solution and the embodiment described in FIG. 4, components or structures with a same function are illustrated with a same numeral in the figures.

As shown in FIG. 16, in a mobile phone 100g provided in this implementation solution, a protection component 22g removed from the top seal 11 is disposed on a mainboard 20g. The battery 10 of the mobile phone 100g includes the cell 1 and a protection board assembly 2g, and an FPC 21g of the protection board assembly 2g includes the first part 211 and a second part 212g. Herein, no protection component is disposed on the second part 212g of the FPC 21g.

In this implementation solution, the first part 211 of the FPC 21g is disposed on the top seal 11, the second part 212g of the FPC 21g is formed by extending from the first part 211, two second parts 212g are disposed, and first connectors 28g are respectively disposed at extension ends of the two second parts 212g. In addition, the two first connectors 28g are respectively plug-in and snap-fit with the second connectors 201g that are correspondingly disposed on the mainboard 20g, to establish an electrical connection of a corresponding signal interface. In other words, the two first connectors 28g are respectively electrically connected to a positive voltage end and a negative voltage end on the mainboard 20g side, to form an electrical signal loop. The protection circuit formed by the protection components 22g is formed on the mainboard 20g, to effectively reduce a thickness size at the position of the top seal of the cell.

In another specific implementation, there may be one second part connected to the mainboard side, provided that the foregoing functions can be implemented. In addition, it may be understood that the first connector 28g used as the second connection part on the side of the first part 211 of the FPC 21g adapts to the second connector 201g used as the third connection part on the side of the mainboard 20g to establish a signal connection. In another specific implementation, another structure may be used, for example, but not limited to a pad or a conducting wire.

In a specific implementation, the protection components may alternatively be arranged in groups. A first protection component whose height size is greater than the preset threshold is disposed on the mainboard 20g, and a second protection component whose height size is less than or equal to the preset threshold is disposed on the FPC 21g.

In another specific implementation, the protection component 22g removed from the top seal 11 may be further disposed on a secondary board (also referred to as a sub-board, not shown in the figure) of the mobile phone, the secondary board may be connected to the mainboard 50 through a flat cable, and a receiver, a button charging interface, and the like may be integrated on the secondary board. The protection component 22g is disposed on the sub-board of the mobile phone, so that the protection component is also disposed away from the stacking area of the top seal 11, to reduce a thickness at the position of the top seal.

Further, to avoid affecting safety and reliability in the battery charging and discharging process due to a short circuit between the removed protection component 22g and the main body of the cell 1, in this implementation solution, a short-circuit protection structure is disposed on the second part of the FPC 21. The short-circuit protection structure may be disposed at a position that is on the first part 211 and that is close to the cell. In a specific implementation, the short-circuit protection structure may alternatively be disposed at a position that is on the second part 212g and that is close to the first part 211, that is, disposed on a line close to the main body of the cell 1, which is specifically a position area marked with S in FIG. 16.

In a specific implementation, the short-circuit protection structure may be a narrow line segment on a conducting wire of the FPC 21, or a fuse or a circuit breaker disposed on the second part. A specific working principle is the same as that in the foregoing implementation, and details are not described herein again.

In the foregoing implementation solution, the top seal 11 is formed by extending in the length direction of the cell. In a specific implementation, the top seal may extend from the cell and bends in the thickness direction. Refer to FIG. 17. FIG. 17 is a diagram of an assembly relationship of another protection board assembly according to an embodiment of this application. To clearly show a difference and a relationship between this implementation solution and the embodiment described in FIG. 15, components or structures with a same function are illustrated with a same numeral in the figures.

As shown in FIG. 17, a protection board assembly 2i of a battery 10i is connected to a cell 1i, and extends from a top seal 11i on a head of the cell 1i and then bends, and is disposed in a thickness direction of the cell 1i. An FPC 21i of the protection board assembly 2i includes a first part 211i and a second part 212i. Herein, the first part 211i of the FPC 21i is electrically connected to the top seal 11i that extends from an electrode tab, no protection component is disposed on the second part 212g of the FPC 21i, and a first protection component removed from the top seal 11 is disposed on the mainboard (not shown in the figure). Similarly, the first protection component for constructing the protection circuit is a protection component whose height size is greater than the preset threshold. In other words, the first protection component whose size is greater than the preset threshold in the length direction of the battery is disposed on the mainboard.

In this way, space occupied by a large-sized protection component in the length direction at the position of the top seal can be reduced, space occupied by a large-sized protection component at the position of the top seal can be reduced, and volumetric energy density of the battery can also be effectively increased while design requirements for lightness and thinning are met.

In another specific implementation, the first protection component removed from the top seal 11 may alternatively be disposed on the sub-board (not shown in the figure).

It should be understood that a size of the protection component in the length direction of the battery in this implementation solution is a size of the protection component in the thickness direction of the battery in the implementation solution described in FIG. 15.

An embodiment of this application further provides an electronic device. The electronic device includes a mainboard and a battery. The battery may be the battery described in FIG. 3 to FIG. 17, or the battery may include the protection board assembly described in FIG. 3 to FIG. 17.

In addition to the mobile terminal devices such as the mobile phone, the tablet computer, and the notebook computer, the electronic device may further include an electronic device including a rechargeable battery, such as a personal digital assistant (personal digital assistant, PDA), a wearable device, a smart television, a virtual reality (virtual reality, VR) device, and an augmented reality (augmented reality, AR) device.

It should be understood that other functions of a corresponding electronic device are not a core invention point of this application. Therefore, details are not described in this specification.

The foregoing descriptions are merely preferred implementations of the present invention. It should be noted that a person of ordinary skill in the art may make several improvements and modifications without departing from the principle of the present invention, and the improvements and modifications shall be regarded as falling within the protection scope of the present invention.

## Claims

1. A battery, comprising a cell and a protection board assembly, wherein a head of the cell has a top seal, the top seal is disposed in a length direction of the cell, and an electrode tab of the cell extends from the top seal; the protection board assembly comprises an FPC and a first protection component; and the first protection component is a protection component whose size in a thickness direction of the battery is greater than a preset threshold;
the FPC comprises a first part and a second part, the first part of the FPC is disposed on the top seal in a stacked manner, and a first connection part electrically connected to the electrode tab is disposed on the first part of the FPC; and the second part of the FPC is formed by extending from the first part to a direction away from the top seal, and a second connection part configured to be electrically connected to a mainboard is disposed on an extension end of the second part of the FPC; and
the first protection component is disposed on the second part of the FPC.

2. The battery according to claim 1, further comprising a short-circuit protection structure, wherein the short-circuit protection structure is disposed on the FPC.

3. The battery according to claim 2, wherein the short-circuit protection structure is disposed at a position that is on the first part of the FPC and that is near a cell side, or the short-circuit protection structure is disposed at a position that is on the second part of the FPC and that is near the first part.

4. The battery according to claim 2 or 3, wherein the short-circuit protection structure is a narrow line segment; or the short-circuit protection structure is a fuse or a circuit breaker.

5. The battery according to any one of claims 1 to 4, further comprising a first reinforcement sheet, wherein the first connection part is disposed on a surface on one side of a substrate of the first part, and the first reinforcement sheet is attached and fastened to a surface on the other side of the substrate of the first part.

6. The battery according to any one of claims 1 to 5, wherein the protection board assembly further comprises a second protection component, the second protection component is a protection component whose size in the thickness direction of the battery is less than or equal to the preset threshold, and the second protection component is disposed on the second part of the FPC.

7. The battery according to any one of claims 1 to 5, wherein the protection board assembly further comprises a second protection component, the second protection component is a protection component whose size in the thickness direction of the battery is less than or equal to the preset threshold, and the second protection component is disposed on the first part of the FPC.

8. The battery according to any one of claims 1 to 7, wherein the protection component disposed on the second part of the FPC is disposed on the second part after being packaged.

9. The battery according to any one of claims 1 to 7, wherein the protection component disposed on the second part of the FPC is directly disposed on the second part.

10. The battery according to claim 9, further comprising a third reinforcement sheet, wherein the protection component is welded to a surface on one side of a substrate of the second part, and the third reinforcement sheet is attached and fastened to a surface on the other side that is of the substrate of the second part and that is opposite to the protection component.

11. An electronic device, wherein the electronic device comprises a mainboard and a battery, the battery is the battery according to claims 1 to 10, and a protection board assembly of the battery is electrically connected to the mainboard.

12. An electronic device, wherein the electronic device comprises a mainboard, a sub-board, and a battery, the battery comprises a cell, a protection board assembly, and a first protection component, a head of the cell has a top seal, the top seal is disposed in a length direction of the cell, and an electrode tab of the cell extends from the top seal;
the protection board assembly comprises an FPC, the FPC comprises a first part and a second part, the first part of the FPC is disposed on the top seal in a stacked manner, and a first connection part electrically connected to the electrode tab is disposed on the first part of the FPC; and the second part of the FPC is formed by extending from the first part to a direction away from the top seal, a second connection part is disposed on an extension end of the second part of the FPC, and a third connection part electrically connected to the second connection part is disposed on the mainboard; and
the first protection component is a protection component whose size in a thickness direction of the battery is greater than a preset threshold, and the first protection component is disposed on the mainboard or disposed on the sub-board.

13. The electronic device according to claim 12, further comprising a short-circuit protection structure, wherein the short-circuit protection structure is disposed on the FPC.

14. The electronic device according to claim 13, wherein the short-circuit protection structure is a narrow line segment; or the short-circuit protection structure is a fuse or a circuit breaker.

15. An electronic device, wherein the electronic device comprises a mainboard, a sub-board, and a battery, the battery comprises a cell, a protection board assembly, and a first protection component, a head of the cell has a top seal, the top seal is bent relative to the cell and is disposed in a thickness direction of the cell, and an electrode tab of the cell extends from the top seal;
the protection board assembly comprises an FPC, the FPC comprises a first part and a second part, the first part of the FPC is disposed on the top seal in a stacked manner, and a first connection part electrically connected to the electrode tab is disposed on the first part of the FPC; and the second part of the FPC is formed by extending from the first part to a direction away from the top seal, a second connection part is disposed on an extension end of the second part of the FPC, and a third connection part electrically connected to the second connection part is disposed on the mainboard; and
the first protection component is a protection component whose size in a length direction of the battery is greater than a preset threshold, and the first protection component is disposed on the mainboard or disposed on the sub-board.
